# FASCICULE DE BREVET EUROPEEN

(11) **EP 3 086 874 B1**
(45) Date de publication et mention de la délivrance du brevet: **28.11.2018**
(21) Numéro de dépôt: 14816318.1
(22) Date de dépôt: 23.12.2014
(51) Int. Cl.: B01J 20/08, B01J 20/30, C01D 15/04, C01F 7/04

(54) **PROCEDE DE PREPARATION D'UN MATERIAU ADSORBANT MIS EN FORME EN L'ABSENCE DE LIANT ET PROCEDE D'EXTRACTION DE LITHIUM A PARTIR DE SOLUTIONS SALINES UTILISANT LEDIT MATERIAU**
VERFAHREN ZUR HERSTELLUNG EINES ADSORPTIONSMATERIALS IN ABWESENHEIT EINES BINDEMITTELS UND VERFAHREN ZUM EXTRAHIEREN VON LITHIUM AUS SALZLÖSUNGEN UNTER VERWENDUNG DIESES MATERIALS
METHOD OF PREPARING AN ADSORBENT MATERIAL SHAPED IN THE ABSENCE OF BINDER AND METHOD OF EXTRACTING LITHIUM FROM SALINE SOLUTIONS USING SAID MATERIAL

(30) Priorité: 23.12.2013 FR 1363465
(43) Date de publication de la demande: 02.11.2016
(73) Titulaire: Eramet, 75015 Paris (FR); IFP Energies nouvelles, 92500 Rueil-Malmaison (FR)
(72) Inventeur: BOUALLEG, Malika, F-69100 Villeurbanne (FR); LAFON, Olivier, F-69007 Lyon (FR); BURDET, Fabien André Pierre, F-78370 Plaisir (FR); SOULAIROL, Romain Charles Joseph René, F-75014 Paris (FR)
(74) Mandataire: Lavoix
(86) Numéro de dépôt international: PCT/EP2014/079118
(87) Numéro de publication internationale: WO 2015/097202

(56) Documents cités:
- WO-A1-94/19280
- WO-A1-03/041857
- CN-A- 101 829 538
- RU-C1- 2 234 367
- US-A1- 2011 311 419
- Marko Zlokarnik: "Mixing, Introduction" In: "Ullmann's Encyclopedia of Industrial Chemistry", 15 juin 2000 (2000-06-15), Wiley-VCH Verlag GmbH & Co. KGaA, Weinheim, Germany, XP055119580, ISBN: 978-3-52-730673-2 DOI: 10.1002/14356007.b02_24, page 385 - page 386

## Description

### Domaine technique

La présente invention se rapporte au domaine des matériaux solides pour l'adsorption du lithium. En particulier, la présente invention se rapporte à un nouveau procédé de préparation d'un matériau solide cristallisé et sous forme d'extrudés, de formule LiCl.2Al(OH)₃,nH₂O avec n étant compris entre 0,01 et 10, ladite étape de mise en forme par extrusion étant réalisée en l'absence de liant, et à un procédé d'extraction du lithium à partir de solutions salines utilisant ledit matériau solide cristallisé de formule LiCl.2Al(OH)₃,nH₂O avec n étant compris entre 0,01 et 10 préparé selon le nouveau procédé de préparation selon l'invention. La présente invention se rapporte à un matériau solide cristallisé de formule LiCl.2Al(OH)₃,nH₂O avec n étant compris entre 0,01 et 10, mis en forme. La présente invention se rapporte à un dispositif mettant en oeuvre le procédé d'extraction de lithium.

### Art antérieur

Les ions lithium coexistent avec des quantités massives de métaux tels que par exemple les alcalins, les alcalino-terreux, le bore et les sulfates, en particulier dans des solutions salines telles que les saumures. Ainsi, ils doivent faire l'objet d'une extraction économique et sélective à partir de ces solutions salines. En effet, les propriétés chimiques du lithium et des métaux alcalins, de préférence le sodium (Na), et le potassium (K) et des alcalino-terreux, de préférence le magnésium (Mg), le calcium (Ca) et le strontium (Sr), rendent difficile la séparation de ces éléments.

Les matériaux solides de formule LiCl.2Al(OH)₃,nH₂O avec n étant compris entre 0,01 et 10 sont connus pour leur utilisation dans les phénomènes d'adsorption/désorption des ions lithium et en particulier dans les procédés d'extraction du lithium à partir de solutions salines. Ces structures peu stables permettraient l'intercalation d'atomes de Lithium dans la structure et ainsi l'extraction du lithium.

Plusieurs protocoles opératoires conduisant à des solides susceptibles d'adsorber sélectivement le lithium ont été mis en évidence dans l'art antérieur. Dans tous les cas, un solide trihydroxyde d'aluminium Al(OH)₃, préparé ou commercial, est mis en contact avec un précurseur de lithium. Trois principaux précurseurs sont utilisés : le plus utilisé est le chlorure de lithium (LiCl). Un hydroxyde d'aluminium (LiOH) ou un carbonate de lithium (Li₂CO₃) peuvent également être mis en oeuvre.

Le brevet US 6 280 693 décrit un procédé de préparation d'un solide LiCl/Al(OH)₃ par ajout d'une solution aqueuse de LiOH a une alumine hydratée polycristalline pour former du LiOH/Al(OH)₃, et ainsi créer des sites de lithium actifs dans les couches cristallines de l'alumine sans en altérer la structure. La transformation de LiOH/Al(OH)₃ en LiCl/Al(OH)₃ est ensuite réalisée par ajout d'acide chlorhydrique dilué. Les pastilles d'alumine ainsi préparées sont ensuite utilisées dans un procédé d'extraction du lithium à partir de saumures à haute température. Le procédé d'extraction du lithium décrit dans le brevet US 6 280 693 utilise le solide détaillé ci-dessus et comprend les étapes ci-après :
a) Saturation d'un lit de solide par une saumure contenant un sel de lithium LiX, X étant choisi parmi les halogénures, les nitrates, les sulfates et les bicarbonates,
b) Déplacement de la saumure imprégnée par une solution concentrée NaX,
c) Élution du sel LiX capté par le solide par passage d'une solution non saturée de LiX,
d) Déplacement de l'imprégnant par une solution concentrée de NaX, les étapes a) à d) sont ensuite répétées au moins une fois.

Le brevet RU 2 234 367 décrit un procédé de préparation d'un solide de formule LiCl.2Al(OH)₃,nH₂O comprenant une étape de mélange de trichlorure d'aluminium (AlCl₃) et de carbonate de lithium (Li₂CO₃) en présence d'eau à 40°C. Le résidu obtenu est filtré et lavé puis séché pendant 4 heures à 60°C. Le solide ainsi obtenu n'est pas mis en forme.

Le solide obtenu est utilisé pour l'extraction du lithium contenu dans des solutions salines par mise en contact avec de l'eau afin d'éliminer une partie du lithium puis par mise en contact avec une solution saline contenant du lithium. La capacité statique ainsi obtenue est comprise entre 6,0 et 8,0 mg de lithium par g de solide.

Le brevet CN1243112 décrit un procédé de préparation d'un solide de formule LiCl.2Al(OH)₃,nH₂O comprenant une étape de précipitation de microcristaux d'hydroxyde d'aluminium Al(OH)₃ par mise en contact d'AlCl₃ et d'hydroxyde de sodium NaOH, puis la mise en contact desdits microcristaux avec une solution à 6% de chlorure de lithium LiCl à 80°C pendant 2 heures suivie d'une filtration, d'un rinçage et d'un séchage pour obtenir une poudre de LiCl.2Al(OH)₃,nH₂O doté d'une structure non ordonnée et amorphe. Une solution d'un polymère macromoléculaire choisie parmi les résines fluorées, le chlorure de polyvinyle (PVC), le chlorure de polyvinyle chloré (CPVC), le perchlorate d'éthylène et l'acétate-butyrates de cellulose (CAB) faisant office de liant est ensuite mélangée à la poudre de LiCl.2Al(OH)₃,nH₂O pour obtenir une pâte qui est ensuite mise en forme par granulation suivie d'un séchage à l'air.

L'utilisation d'un tel solide dans un procédé d'extraction du lithium des saumures de lacs salés permet d'obtenir un faible rapport Mg/Li et une liqueur mère riche en lithium et conforme aux normes de production de carbonates ou de chlorures de lithium.

La demande de brevet CN 101829538 décrit un procédé de préparation d'un matériau LiCl.Al(OH)₃ sous forme de poudre, comprenant une étape de mélange en milieu aqueux d'une source organique d'aluminium et d'un précurseur de Li. Le matériau obtenu est ensuite filtré et séché à une température comprise entre 30 et 70°C. Aucune étape de mise en forme n'est envisagée.

Un objectif de la présente invention est de fournir un matériau solide permettant l'extraction sélective de lithium à partir de saumure, ledit matériau solide étant de bonne qualité, et présentant une bonne cohésion, sans défauts apparents.

Un objectif de la présente invention est de fournir un nouveau procédé de préparation d'un tel matériau solide.

Un autre objectif de la présente invention est de fournir un procédé d'extraction du lithium de solutions salines utilisant ledit matériau solide.

### Résumé et intérêt de l'invention

Les demandeurs ont découvert un nouveau procédé de préparation d'un matériau solide cristallisé de formule LiCl.2Al(OH)₃,nH₂O avec n étant compris entre 0,01 et 10, et en particulier que le fait de réaliser l'étape de mise en forme par extrusion d'une pâte, en l'absence de liant, directement, après une étape de séchage opérant dans des conditions spécifiques, l'étape de mise en forme étant ensuite suivie d'une étape de séchage finale opérant également dans des conditions spécifiques, permettait d'obtenir un matériau solide cristallisé de formule LiCl.2Al(OH)₃,nH₂O sous forme d'extrudés de bonne qualité, présentant une bonne cohésion, sans défauts apparents. Les demandeurs ont ainsi découvert un nouveau matériau solide cristallisé de formule LiCl.2Al(OH)₃,nH₂O avec n étant compris entre 0,01 et 10, mis en forme, présentant de bonne qualité pour les objectifs recherchés.

On entend de préférence par « matériau de formule LiCl.2Al(OH)₃.nH₂O » un matériau comprenant essentiellement ou consistant d'une phase cristallisée de formule LiCl.2Al(OH)₃,nH₂O.

La présente invention a pour objet un procédé de préparation d'un matériau solide cristallisé de formule LiCl.2Al(OH)₃,nH₂O avec n étant compris entre 0,01 et 10, ledit procédé comprenant au moins les étapes suivantes :
a) une étape de mélange, en milieu aqueux, d'au moins une source d'alumine et d'au moins une source de lithium pour obtenir une suspension,
b) une étape de filtration de la suspension obtenue à l'étape a) pour obtenir une pâte,
c) une étape de séchage de la pâte obtenue à l'issue de l'étape b), à une température comprise entre 20 et 80°C pendant une durée comprise entre 1h et 12h,
d) une étape de mise en forme par extrusion de ladite pâte séchée, directement après l'étape c) de séchage pour obtenir des extrudés, ladite étape d) de mise en forme étant réalisée en l'absence de liant,
e) une étape de séchage des extrudés obtenus à l'issue de l'étape d) à une température comprise entre 20 et 200°C pendant une durée comprise entre 1 et 20 heures, pour obtenir le matériau solide cristallisé de formule LiCl.2Al(OH)₃,nH₂O sous forme d'extrudés.

Dans toute la suite du texte, on entend par liant, tout composé organique ou inorganique susceptible d'être ajouté dans l'étape d) de mise en forme, ou tout précurseurs de composés organiques ou inorganiques susceptibles de former un liant organique ou inorganique in situ, dans les conditions de l'étape d) de mise en forme par extrusion.

Un avantage du procédé de préparation selon l'invention est de permettre l'obtention d'un matériau solide cristallisé mis en forme, sous forme d'extrudés de formule LiCl.2Al(OH)₃,nH₂O avec n étant compris entre 0,01 et 10, de bonne qualité, sans défauts apparents, et présentant une bonne cohésion.

La présente invention a donc également pour objet un matériau solide cristallisé de formule LiCl.2Al(OH)₃,nH₂O avec n étant compris entre 0,01 et 10, mis en forme. Ce matériau solide mise en forme est susceptible être obtenu selon le procédé de l'invention. Par « mis en forme », on entend que le matériau est solide et présente une cohésion suffisante lorsque que le solide est mis au contact d'une solution de saumure pour qu'il ne perde sensiblement pas son intégrité physique, c'est-à-dire qu'il conserve sensiblement sa mise en forme. Plus précisément, un solide mis en forme au sens de l'invention couvre un solide conservant sa cohésion dans les conditions d'extraction de lithium définies dans les exemples. En particulier, les termes « mis en forme » couvrent un matériau obtenu par granulation, (appelé granulé), et de préférence par extrusion (appelé extrudé).

Un autre avantage du procédé de préparation selon l'invention est de permettre l'obtention d'un matériau solide cristallisé mis en forme, sous forme d'extrudés, de formule LiCl.2Al(OH)₃,nH₂O avec n étant compris entre 0,01 et 10, présentant pas ou peu de fissures qui pourraient provoquer un gonflement néfaste à la cohésion et à la tenue du matériau lorsque celui est mis au contact d'une solution saumure.

La présente invention a également pour objet un procédé d'extraction du lithium de solutions salines utilisant ledit matériau solide cristallisé mis en forme, et sous forme d'extrudés de formule LiCl.2Al(OH)₃,nH₂O avec n étant compris entre 0,01 et 10, préparé selon le nouveau procédé de préparation selon l'invention.

Un avantage du procédé d'extraction selon l'invention est de permettre l'extraction sélective du lithium à partir d'une solution saline et d'obtenir ainsi un facteur de décontamination élevé par rapport à la solution saline initiale, calculé comme étant le rapport X/Li qui est égal au rapport molaire de concentrations X/Li dans la solution saline initiale divisé par le rapport molaire de concentrations X/Li dans la solution finale, X étant choisi parmi le sodium (Na), le potassium (K), le magnésium (Mg), le calcium (Ca), le bore (B), le soufre (S) et le strontium (Sr).

La présente invention a également pour objet un dispositif d'extraction de lithium de solution(s) saline(s). Le dispositif selon l'invention met ainsi en oeuvre le procédé d'extraction selon l'invention.

### Description de l'invention

Conformément à l'invention, au moins une source d'alumine et au moins une source de lithium, ladite source de lithium étant le chlorure de lithium sont mélangées en milieu aqueux pour obtenir une suspension dans l'étape a).

De préférence, la source d'alumine est le trihydroxyde d'aluminium Al(OH)₃.

Le trihydroxyde d'aluminium Al(OH)₃ peut avantageusement être commercial.

De préférence, le trihydroxyde d'aluminium Al(OH)₃ est préparé par précipitation de trichlorure d'aluminium (AlCl₃) et de soude (NaOH).

Dans ce cas, ladite source d'alumine et de préférence le trihydroxyde d'aluminium Al(OH)₃ est préparé préalablement au mélange avec au moins la source de lithium. Le trichlorure d'aluminium AlCl₃ et la soude NaOH sont avantageusement mélangés en présence d'eau pour former un précipité qui est avantageusement filtré et lavé au moins une fois. Le précipité obtenu est ensuite mélangé selon l'étape a) avec au moins la source de lithium pour obtenir une suspension. La source de lithium est le chlorure de lithium (LiCl).

De préférence, au moins une source d'alumine et la source de lithium sont mélangées en présence d'eau pour obtenir une suspension dans l'étape a). De préférence, ladite étape a) de mélange opère sous agitation vigoureuse.

De préférence, ladite étape a) de mélange opère à une température comprise entre 40 et 120°C et de manière préférée entre 60 et 100°C, pendant une durée comprise entre 1 heure et 10 heures, de préférence entre 1 et 8 heures, de manière préférée entre 1 et 6 heures et de manière plus préférée entre 1 et 3 heures.

Conformément à l'invention, la suspension obtenue à l'issue de l'étape a) subit une étape b) de filtration pour obtenir une pâte.

De préférence, la filtration est réalisée sur un filtre Büchner, par déplacement d'eau.

Conformément à l'invention, la pâte obtenue à l'issue de l'étape b) est séchée dans une étape c) de séchage à une température comprise entre 20 et 80°C, pendant une durée comprise entre 1h et 12 h.

De préférence, ladite étape de séchage opère, de manière préférée en étuve, à une température comprise entre 20 et 60°C et de manière très préférée entre 30 et 50°C, pendant une durée comprise entre 1h et 10 h.

Les conditions opératoires de ladite étape c) de séchage permettent l'obtention d'une pâte séchée présentant une perte au feu (PAF) comprise entre 45 et 75% et de préférence entre 50 et 70%. La perte au feu obtenue permet l'extrusion de la pâte séchée dans de bonnes conditions et l'obtention d'extrudés résistants et sans défauts, c'est à dire sans fissures.

De manière à déterminer la PAF avant l'étape de mise en forme, une partie de la pâte obtenue est prélevée et mise à l'étuve pendant 6 h à 120°C. La PAF est obtenue par différence entre la masse de l'échantillon avant et après passage à l'étuve.

Conformément à l'invention, ladite pâte séchée obtenue à l'issue de l'étape c) de séchage subit, directement après l'étape c) de séchage, une étape d) de mise en forme par extrusion pour obtenir des extrudés, ladite étape de mise en forme étant réalisée en l'absence de liant.

De préférence, ladite pâte séchée ne subit pas d'étapes intermédiaires entre ladite étape c) de séchage et ladite étape d) de mise en forme par extrusion, de préférence aucune étape de malaxage et de manière plus préférée aucune étape de malaxage acide/basique.

Ainsi, de manière plus préférée, ladite étape d) de mise en forme est réalisée sans ajout d'acide ni de base à la pâte séchée introduite dans ladite étape d).

Ladite étape d) de mise en forme est réalisée en l'absence de liants choisis parmi les liants inorganiques, tels que par exemples les liants hydrauliques ou les liants inorganiques susceptibles d'être générés dans les conditions de ladite étape d) par ajout de précurseurs de liants inorganiques, et les liants organiques, tels que par exemple les paraffines ou les polymères.

Le matériau solide selon l'invention ne comprend pas de liant, notamment choisis parmi les liants inorganiques et les liants organiques.

Ladite étape d) de mise en forme par extrusion est avantageusement réalisée de manière connue de l'Homme du métier.

En particulier, la pâte séchée issue de l'étape c) de séchage passe avantageusement à travers une filière, à l'aide par exemple, d'un piston ou d'une extrudeuse continue double vis ou monovis. Le diamètre de la filière de l'extrudeuse est avantageusement variable et est compris entre 0,1 et 5 mm, de préférence entre 0,2 et 3 mm et de manière préférée entre 0,3 et 2 mm. La forme de la filière, et par conséquent, la forme du matériau obtenu sous forme d'extrudé, est avantageusement cylindrique, et peut-être par exemple de section circulaire, annulaire, trilobée, quadrilobée ou bien multilobée. Le matériau solide mis en forme selon l'invention peut ainsi présenter de telles caractéristiques. Notamment le matériau solide mis en forme présente une section ou diamètre sensiblement équivalent à celui de la filière de l'extrudeuse, et avantageusement compris entre 0,1 et 5 mm, de préférence entre 0,2 et 3 mm et de manière préférée entre 0,3 et 2 mm. Ainsi le matériau mis en forme selon la présente invention peut être filaire de longueur par exemple comprise entre 1 et 10 cm, et encore par exemple entre 2 et 6 cm. La forme peut être creuse (tubulaire) ou pleine.

Conformément à l'invention, les extrudés obtenus à l'issue de l'étape d) subissent une étape e) de séchage à une température comprise entre 20 et 200°C pendant une durée comprise entre 1 heure et 20 heures, pour obtenir le matériau solide cristallisé de formule LiCl.2Al(OH)₃,nH₂O sous forme d'extrudés.

De préférence, ladite étape e) de séchage opère à une température comprise entre 20 et 100°C, de manière préférée entre 20 et 80°C et de manière très préférée entre 20 et 60°C, pendant une durée comprise entre 1 et 18 heures, de préférence entre 5 et 14 heures et de manière préférée entre 8 et 14 heures.

Les conditions spécifiques de ladite étape e) de séchage permettent l'obtention d'un matériau solide cristallisé présentant la phase LiCl.2Al(OH)₃,nH₂O désirée.

Ladite étape e) de séchage est avantageusement réalisée selon les techniques connues de l'Homme du métier et de préférence en étuve.

Le procédé selon la présente invention permet donc l'obtention d'un matériau solide cristallisé de formule LiCl.2Al(OH)₃,nH₂O avec n étant compris entre 0,01 et 10, de préférence entre 0,1 et 5 et de manière préférée entre 0,1 et 1, sous forme d'extrudés de section ou diamètre compris entre 0,2 et 5 mm, de préférence entre 0,3 et 4 mm, de manière préférée entre 0,3 et 3 mm, de manière très préférée entre 0,3 et 2 mm et de manière encore plus préférée entre 0,3 et 1,8 mm.

Les meilleurs résultats en terme de tenue mécanique et de cohésion du matériau solide cristallisé obtenus selon le procédé de préparation selon l'invention sont obtenus dans le cas d'extrudés de section ou diamètre compris entre 0,2 et 5 mm et de préférence compris entre 0,3 et 1,8 mm, lesdits extrudés ayant été obtenus grâce à la combinaison d'une étape de mise en forme bien spécifique telle que décrite ci-dessus et d'une étape de séchage e) finale réalisée à une température comprise entre 20 et 60°C et en particulier à 40°C, pendant une durée comprise entre 5 et 14 heures, de préférence entre 8 et 14 heures et en particulier pendant 8 heures.

Le matériau solide cristallisé de formule LiCl.2Al(OH)₃,nH₂O sous forme d'extrudés, préparé selon l'enchainement des étapes a), b), c) et d) du procédé de préparation selon l'invention peut être caractérisé selon les techniques suivantes : l'adsorption d'azote pour la détermination de la surface spécifique selon la méthode BET; la diffractométrie de rayons X, dans le domaine d'angle de diffraction 2θ = 0,8 à 40° ± 0,02° en géométrie de réflexion pour identifier la structure dudit matériau et l'analyse élémentaire.

Le matériau solide cristallisé de formule LiCl.2Al(OH)₃,nH₂O mis en forme, sous forme d'extrudés, présente avantageusement une surface spécifique mesurée selon la méthode BET comprise entre 1 et 30 m²/g et de préférence entre 1 et 20 m²/g.

Le diagramme de diffraction de rayon X du matériau solide cristallisé de formule LiCl.2Al(OH)₃,nH₂O avec n étant compris entre 0,01 et 1, de préférence entre 0,1 et 0,5 et de manière préférée entre 0,1 et 0,4, obtenu selon l'invention, mis en forme, sous forme d'extrudés, est caractéristique d'un matériau non amorphe et présente au moins les raies suivantes :

| 2θ | d(Å) |
|---|---|
| 11,505 | 7,69 |
| 20,195 | 4,39 |
| 23,065 | 3,85 |
| 35,937 | 2,50 |
| 39,948 | 2,26 |
| 55,406 | 1,66 |
| 63,243 | 1,47 |
| 64,349 | 1,45 |

Le procédé de préparation selon la présente invention permet donc l'obtention d'un matériau solide cristallisé de formule LiCl.2Al(OH)₃,nH₂O mis en forme, sous forme d'extrudés, présentant à la fois une surface spécifique BET faible, une bonne cohésion, et n'ayant pas de défauts apparents.

Les bonnes propriétés du matériau obtenu résultent de l'effet combiné de de mise en forme, par extrusion d'une pâte, en l'absence de liant, directement, après une étape de séchage de préférence opérant dans des conditions spécifiques, et à la mise en oeuvre d'une étape de séchage finale suivant la mise en forme, opérant de préférence également dans des conditions spécifiques.

Ainsi la présente invention a pour objet un matériau solide cristallisé de formule LiCl.2Al(OH)₃,nH₂O avec n étant compris entre 0,01 et 1, de préférence entre 0,1 et 0,5 et de manière préférée entre 0,1 et 0,4, mis en forme, sous forme d'extrudé. En particulier le matériau solide extrudé est susceptible d'être obtenu selon le procédé de préparation de l'invention.

La présente invention a également pour objet un procédé d'extraction du lithium à partir d'une solution saline utilisant ledit matériau solide cristallisé de formule LiCl.2Al(OH)₃,nH₂O avec n étant compris entre 0,01 et 10, selon l'invention.

Ladite solution saline utilisée dans le procédé d'extraction selon l'invention comprend avantageusement une concentration en lithium comprise entre 0,001 mol/L et 0,5 mol/L, de préférence entre 0,02 mol/L et 0,3 mol/L.

Ladite solution saline contient également d'autres espèces, telles que par exemple les espèces choisies parmi la liste suivante : Na, K, Rb, Cs, Mg, Ca, Sr, Ba, F, Cl, Br, I, SO₄, CO₃, NO₃, et HCO₃. Ladite solution saline peut avantageusement être saturée en sels ou non.

Ladite solution saline peut être toute solution saline naturelle, concentrée ou issue d'un procédé d'extraction ou de transformation du lithium. Par exemple, ladite solution saline utilisée dans le procédé d'extraction selon l'invention peut avantageusement être choisie parmi les saumures de lacs salés ou de sources géothermales, les saumures soumises à une évaporation pour obtenir des saumures concentrées en lithium, l'eau de mer, les effluents des usines de production de cathodes, ou de production de chlorure ou d'hydroxyde de lithium et les effluents des procédé d'extraction du lithium à partir de minéraux.

Le procédé d'extraction du lithium selon l'invention est de préférence un procédé d'extraction sélective du lithium. En effet, il permet la séparation du lithium des métaux alcalins, de préférence le sodium (Na), et le potassium (K) et des alcalino-terreux, de préférence le magnésium (Mg), le calcium (Ca) et le strontium (Sr), présents en quantité massive dans les solutions salines traitées dans ledit procédé d'extraction.

Le procédé d'extraction du lithium selon l'invention permet également la séparation sélective du lithium des autres composés tels que le bore et les sulfates.

Le procédé d'extraction du lithium selon l'invention est mis en oeuvre dans une unité comprenant au moins une colonne, la ou lesdites colonnes comprenant au moins un lit dudit matériau solide cristallisé de formule LiCl.2Al(OH)₃,nH₂O avec n étant compris entre 0,01 et 1, mis en forme et préparé selon le procédé de préparation selon l'invention.

De préférence, ledit procédé d'extraction du lithium selon l'invention est mis en oeuvre dans une unité comprenant entre une et quatre colonnes, et de manière préférée entre deux et trois colonnes.

Ledit procédé d'extraction du lithium comprend avantageusement au moins les étapes suivantes :
- une étape d'activation dudit matériau solide cristallisé de formule LiCl.2Al(OH)₃,nH₂O avec n étant compris entre 0,01 et 10,
- une étape de chargement dudit matériau activé par adsorption réalisée par passage de ladite solution saline sur ledit matériau activé,
- au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

De préférence, ladite étape d'activation du matériau solide cristallisé de formule LiCl.2Al(OH)₃,nH₂O avec n étant compris entre 0,01 et 10, sous forme d'extrudés, est réalisée une seule fois lors de la mise en colonne du matériau synthétisé et mis en forme selon le procédé de préparation selon l'invention.

Ladite étape d'activation permet d'activer les sites destinés à adsorber sélectivement le lithium.

De préférence, ladite étape d'activation est avantageusement réalisée par le passage ascendant ou descendant, et de préférence descendant, d'eau ou d'une solution de sel de lithium ayant une concentration comprise entre 0,001 mol/L et 0,1 mol/L, de préférence entre 0,001 mol/L et 0,05 mol/L et de manière préférée entre 0,01 et 0,04 mol/L.

De manière préférée, le sel de lithium utilisé en solution dans ladite étape d'activation est choisi parmi le chlorure de lithium (LiCI), le nitrate de lithium et le bromure de lithium.

De manière très préférée, le sel de lithium utilisé en solution dans ladite étape d'activation est le chlorure de lithium (LiCl).

Selon un mode de réalisation préféré, ledit matériau solide cristallisé activé subit à l'issue de l'étape d'activation une étape de lavage avec une solution de chlorure de lithium (LiCl).

Ladite étape d'activation est avantageusement réalisée à une température comprise entre 0°C et 90°C, et de préférence entre 10°C et 60°C, et de manière préférée entre 10°C et 30°C à un débit compris entre 0,1 BV/h et 30 BV/h, et de préférence entre 1 BV/h et 15 BV/h.

La quantité de solution nécessaire à l'activation est avantageusement comprise entre 1 BV et 30 BV, de préférence entre 2 BV et 20 BV.

On entend par BV, le volume occupé par le lit du solide dans la colonne.

Ladite étape de chargement dudit matériau activé par adsorption est avantageusement réalisée par passage ascendant ou descendant, et de préférence ascendant, de la solution saline traitée dans le procédé d'extraction selon l'invention, sur ledit matériau activé.

Ladite étape de chargement est avantageusement effectuée à une température comprise entre 0°C et 90°C, et de préférence entre 10°C et 70°C à un débit compris entre 0,1 BV/h et 30 BV/h, et de préférence entre 1 BV/h et 15 BV/h.

La quantité de solution nécessaire pour saturer ledit matériau dépend de la capacité d'adsorption dudit matériau et de la concentration en lithium de la solution saline.

La capacité d'adsorption dudit matériau est comprise entre 1 et 50, de préférence entre 1 et 30 et de manière préférée entre 1 et 10 mg de Li/g de matériau solide sec.

Dans le cas où ledit procédé d'extraction du lithium selon l'invention est mis en oeuvre dans une unité comprenant deux colonnes, la première colonne est avantageusement saturée par le lithium lors de ladite étape de chargement. La deuxième colonne, recevant le flux de sortie de la première colonne, est avantageusement chargée jusqu'à l'obtention d'une fuite en lithium ne dépassant pas 10% de la concentration en lithium du flux d'entrée et de préférence 5%, permettant ainsi de maximiser le rendement de récupération en lithium.

Dans le cas où ledit procédé d'extraction du lithium selon l'invention est mis en oeuvre dans une unité comprenant trois colonnes, la troisième colonne, déjà saturée en lithium, est consacrée aux étapes de lavage puis de désorption du lithium, décrites ci-après, pendant le chargement des deux autres colonnes.

La présente invention couvre un dispositif comprenant de telles unités. Le dispositif selon l'invention peut comprendre une ou plusieurs unités selon l'invention.

La première fraction du flux de sortie de ladite étape de chargement par adsorption, avantageusement entre 0 BV et 1 BV, correspond à l'élimination de l'imprégnant issu de l'étape d'activation du matériau solide. Cette fraction peut être considérée comme un effluent ou recyclée, et de préférence recyclée comme flux d'entrée de l'étape de désorption. Dans le cas du traitement d'une saumure naturelle ou d'eau de mer, au-delà de 1 BV, l'intégralité du flux de sortie de ladite étape de chargement par adsorption, appelé ci-après raffinat qui n'a subi aucun traitement chimique, est avantageusement et de préférence renvoyé vers le gisement de solution saline d'origine.

A l'issue de l'étape de chargement par passage de la solution saline traitée dans le procédé selon l'invention sur le matériau activé, la solution saline imprègne ledit matériau activé.

La solution saline imprégnant le matériau activé est ensuite lavée dans au moins une étape de lavage par passage d'une solution de lavage sur ledit matériau.

Ladite ou lesdites étape(s) de lavage de la solution saline imprégnant ledit matériau, est (sont) avantageusement réalisée(s) par passage ascendant ou descendant d'une solution de lavage sur ledit matériau, et de préférence descendant.

De préférence, ladite solution de lavage est choisie parmi l'eau et une solution aqueuse de sel de sodium et de préférence de chlorure de sodium (NaCl), comprenant éventuellement un sel de lithium et de préférence le chlorure de lithium (LiCl), ladite solution présentant avantageusement une concentration en sel de sodium et de préférence en chlorure de sodium (NaCl), supérieure à 2 mol/L, de préférence comprise entre 2 mol/L et la saturation et une concentration en sel de lithium et de préférence en chlorure de lithium (LiCl), comprise entre 0 mol/L et 2 mol/L.

Selon un mode de réalisation préféré, ladite solution saline imprégnant le matériau activé subit une étape finale de lavage par passage d'une solution de lavage aqueuse de chlorure de sodium (NaCl) comprenant éventuellement du chlorure de lithium (LiCl), sur ledit matériau.

Ladite étape de lavage est avantageusement réalisée à une température comprise entre 0°C et 90°C, et de préférence entre 10°C et 70°C, et à un débit compris entre 0,1 BV/h et 30 BV/h, et de préférence entre 1 BV/h et 15 BV/h. La quantité de solution nécessaire au lavage est comprise entre 0,1 BV et 10 BV, typiquement dans la gamme 0,5 BV à 5 BV.

Le flux de sortie de ladite étape de lavage est considéré comme un effluent ou est avantageusement recyclé, et de préférence recyclé à l'entrée de l'étape de chargement ou directement à l'entrée de la deuxième colonne dans le cas où ledit procédé d'extraction du lithium selon l'invention est mis en oeuvre dans une unité comprenant au moins deux colonnes.

Le dispositif selon la présente invention peut comprendre avantageusement une unité de recyclage du flux de sortie de l'unité de lavage.

Ladite étape de lavage permet le lavage de la solution saline imprégnée dans ledit matériau lors de l'étape de chargement dudit matériau par adsorption, tout en limitant la désorption du lithium.

Dans le cas où ladite solution de lavage est une solution aqueuse saturée de chlorure de sodium (NaCl), ladite étape de lavage permet non seulement d'éliminer la solution saline imprégnée dans ledit matériau lors de l'étape de chargement dudit matériau par adsorption mais aussi de désorber les éléments tels que le bore, les sulfates, les alcalins autres que le lithium et les alcalino-terreux.

L'étape de désorption du lithium est ensuite réalisée par passage d'eau ou d'une solution aqueuse de chlorure de lithium (LiCl) sur ledit matériau à l'issue de l'étape de lavage pour obtenir un éluat comprenant au moins du lithium.

De préférence, ladite étape de désorption est réalisée par passage ascendant ou descendant, et de préférence descendant, d'eau ou d'une solution de chlorure de lithium (LiCl) contenant de 0,001 mol/L à 2 mol/L de LiCl, et de préférence de 0,01 mol/L à 1 mol/L.

Ladite étape de désorption est avantageusement réalisée à une température comprise entre 0°C et 90°C, et de préférence entre 10°C et 70°C à un débit compris entre 0,1 BV/h et 30 BV/h, et de préférence entre 1 BV/h et 15 BV/h.

La quantité de solution de chlorure de lithium (LiCl) nécessaire à la désorption est avantageusement comprise entre 0,01 et 10 BV, et de préférence entre 0,05 BV et 5 BV.

Le flux de sortie de ladite étape de désorption du lithium génère le produit final du procédé, appelé éluat.

L'éluat est avantageusement récupéré entre 0 BV et 4 BV, et de préférence entre 0,2 BV et 3 BV.

L'ensemble des autres fractions du flux de sortie de cette étape ne constituant pas le produit final appelé éluat, est considéré comme un effluent ou est avantageusement recyclé, et de préférence recyclé à l'entrée de l'étape de lavage ou de l'étape de chargement.

L'éluat obtenu à l'issue du procédé d'extraction selon l'invention est une solution contenant majoritairement les éléments Li, Na et Cl ainsi que des impuretés de préférence choisies parmi K, Mg, Ca, Sr, B ou SO₄.

L'éluat est ensuite avantageusement concentré puis purifié pour obtenir un sel de lithium de haute pureté.

Ledit procédé d'extraction du lithium selon l'invention permet l'extraction sélective du lithium à partir d'une solution saline et permet ainsi d'obtenir un facteur de décontamination élevé par rapport à la solution saline initiale, calculé comme étant le rapport X/Li qui est égal au rapport molaire de concentration X/Li dans la solution saline initiale divisé par le rapport molaire de concentration X/Li dans l'éluat, X étant choisi parmi le sodium (Na), le potassium (K), le magnésium (Mg), le calcium (Ca), le bore (B), le soufre (S) et le strontium (Sr).

La présente invention couvre également un dispositif d'extraction de lithium caractérisé en ce qu'il comprend une unité comprenant au moins une colonne, ladite colonne comprenant au moins une garniture comprenant le matériau solide cristallisé de formule LiCl.2Al(OH)₃,nH₂O avec n étant compris entre 0,01 et 1, de préférence entre 0,1 et 0,5 et de manière préférée entre 0,1 et 0,4, mis en forme, tel que défini selon la présente invention.

Plus particulièrement, l'invention couvre un dispositif mettant en oeuvre le procédé d'extraction de lithium selon l'invention. Encore plus précisément, le dispositif de la présente invention comprend des unités ou moyens mettant en oeuvre les différentes étapes du procédé d'extraction de lithium selon l'invention.

Par « selon l'invention » ou des termes équivalents, on entend couvrir tout mode de réalisation, variante, caractéristique avantageuse ou préférée, pris seul ou selon l'une quelconque de leurs combinaisons, sans aucune limitation.

### Description des figures :

La figure 1 représente une photo du matériau solide de formule LiCl.2Al(OH)₃,nH₂O obtenu sous forme d'extrudés selon l'exemple comparatif 2.
La figure 2 représente le diagramme de diffraction des rayons X du matériau solide de formule LiCl.2Al(OH)₃,nH₂O obtenu sous forme d'extrudés selon l'exemple comparatif 3.
La figure 3 représente une photo du matériau solide de formule LiCl.2Al(OH)₃,nH₂O obtenu sous forme d'extrudés selon l'exemple 4 selon l'invention.
La figure 4 représente le diagramme de diffraction des rayons X du matériau solide de formule LiCl.2Al(OH)₃,nH₂O obtenu sous forme d'extrudés selon l'exemple 4 selon l'invention.

L'invention est illustrée par les exemples suivants qui ne présentent, en aucun cas, un caractère limitatif.

### Exemples:

### Exemple 1 : (comparatif)

On prépare un matériau solide de formule LiCl.2Al(OH)₃,nH₂O avec n étant compris entre 0,01 et 1, selon un procédé de synthèse non-conforme à l'invention en ce que l'étape de mise en forme de la pâte obtenue est réalisée selon la technique classique de malaxage acide/basique extrusion, technique mise en oeuvre selon les connaissances de l'homme du métier.

### 1/ synthèse Al(OH)₃

Dans un bêcher refroidi par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés lentement. Ce gâteau est mis en suspension dans un bêcher de 3 L avec 320 mL d'eau.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8 h suivent les 2 premières étapes.

La pâte séchée obtenue est ensuite mise en forme selon la technique classique de malaxage acide/basique extrusion. La pâte séchée est introduite dans un malaxeur de type Brabender. L'eau acidifiée avec de l'acide nitrique est ajouté en 4 minutes, sous malaxage à 20 tours/min. Le malaxage acide est poursuivi pendant 10 minutes. Une étape de neutralisation est ensuite réalisée par ajout d'une solution ammoniacale dans le malaxeur et le malaxage est poursuivi pendant 3 minutes.

Le malaxage est réalisé avec un taux d'acide total, exprimé par rapport à la pâte séchée de 2 %, et un taux de neutralisation de 20 %.

A l'issue du malaxage, aucune pâte cohésive n'a pu être obtenue.

Le solide mouillé obtenu est mis en forme à l'aide d'une extrudeuse piston (MTS), équipée d'une filière cylindrique de 1 mm de diamètre.

Aucun extrudé intact n'a pu être obtenu.

Les joncs obtenus sont très friables et n'ont aucune tenue dans la saumure.

### Exemple 2 (comparatif) :

On prépare un matériau solide de formule LiCl.2Al(OH)₃,nH₂O avec n étant compris entre 0,01 et 1, selon un procédé de synthèse non-conforme à l'invention en ce que l'étape de mise en forme de la pâte obtenue est réalisée par malaxage - extrusion en présence d'un liant inorganique de la famille des liants hydraulique ajouté pendant la phase de malaxage.

37,7g du matériau solide de formule LiCl.2Al(OH)₃,nH₂O avec n étant compris entre 0.01 et 1 est obtenu selon le procédé décrit dans l'exemple 1 à la différence près que l'étape de mise en forme est réalisée par malaxage - extrusion en présence d'un liant inorganique.

La pâte séchée obtenue à l'issue du premier séchage de l'exemple 1 est introduite dans un malaxeur de type Brabender en présence de 21,8 g d'eau et en présence de 4,6 g de ciment Dyckerhoff en tant que liant hydraulique et est simplement malaxé.

La pâte obtenue est mise en forme à l'aide d'une extrudeuse piston (MTS), équipée d'une filière cylindrique de 1 mm de diamètre.

Les extrudés obtenus à l'issue de l'étape de mise en forme sont ensuite séchés en étuve à 40°C pendant 12h.

Les extrudés obtenus à l'issue de l'étape de mise en forme ont également été séchés en étuve climatique à 25 °C pendant 48h sous air saturé avec 98% d'eau.

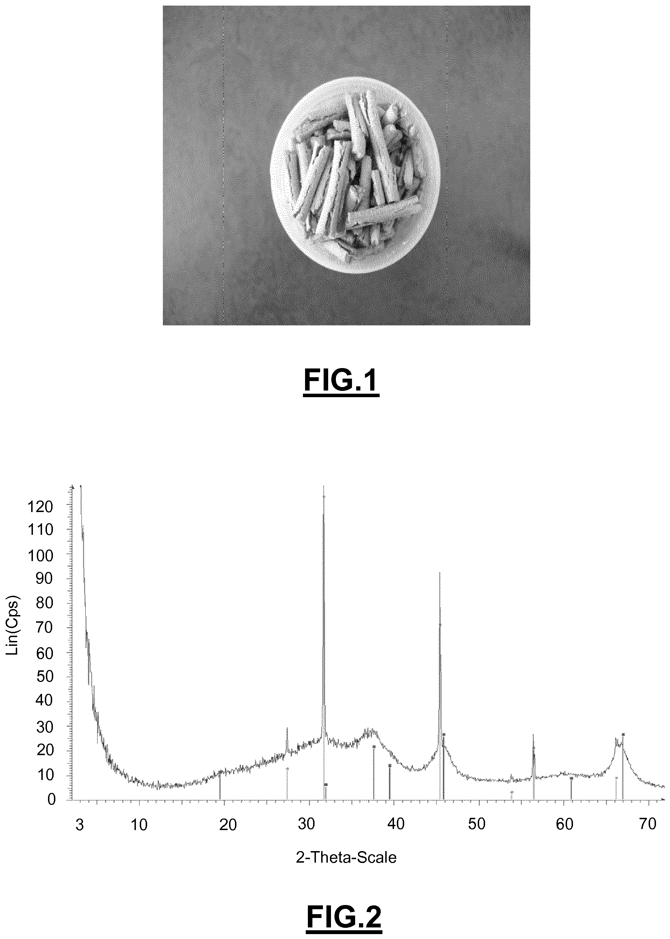

Les deux méthodes de séchage ont menés au même résultat : les extrudés obtenus sont représentés sur la figure 1, ils sont friables et présentent de nombreuses fissures.

### Exemple 3 : (comparatif)

On prépare un matériau solide de formule LiCl.2Al(OH)₃,nH₂O avec n étant compris entre 0,01 et 1, selon un procédé de synthèse non-conforme à l'invention en ce que l'étape de calcination des extrudés est réalisée selon les connaissances de l'homme du métier à une température au-dessus de 500°C.

### 1/ synthèse Al(OH)₃

Dans un bêcher refroidit par un bain de glace, une solution contenant 326 ml d'eau permutée et 135,6 g de chlorure d'aluminium hexahydraté AlCl₃ est préparée. Ensuite sous agitation magnétique, 67,5 g d'hydroxyde de sodium NaOH sont ajoutés lentement. Ce gâteau est mis en suspension dans un bécher de 3 L avec 320 mL d'eau.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 40°C pendant 8 h suivent les 2 premières étapes.

La pâte obtenue est mise en forme directement à l'aide d'une extrudeuse piston (MTS), équipée d'une filière cylindrique de 0,8 mm de diamètre, sans étape de malaxage préalable. Des extrudés présentant un aspect correct sont obtenus. Ces extrudés sont calcinés à 500°C pendant 4 h.

Le diagramme de diffraction des rayons X des extrudés du matériau solide de formule LiCl.2Al(OH)₃,nH₂O obtenu à la figure 2 montre une phase non désirée de type Li_{0,5}Al₂O₄ qui est un produit issu de la décomposition de la phase LiCl.2Al(OH)₃,nH₂O.

### Exemple 4 (invention) :

On prépare un matériau solide de formule LiCl.2Al(OH)₃,nH₂O avec n = 0,25 selon un procédé de synthèse conforme à l'invention en ce que l'étape de mise en forme de la pâte obtenue est réalisée directement après l'étape de séchage, sans étape de malaxage préalable.

### 1/ synthèse Al(OH)₃

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés lentement. Ce gâteau est mis en suspension dans un bécher de 3 L avec 320 mL d'eau.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 40°C pendant 8 h suivent les 2 premières étapes.

La pâte obtenue est mise en forme directement à l'aide d'une extrudeuse piston (MTS), sans aucune étape de malaxage intermédiaire de ladite pâte. L'extrudeuse piston est équipée d'une filière cylindrique de 0.8 mm de diamètre. Ces extrudés sont ensuite séchés à 40°C pendant 12h en étuve.

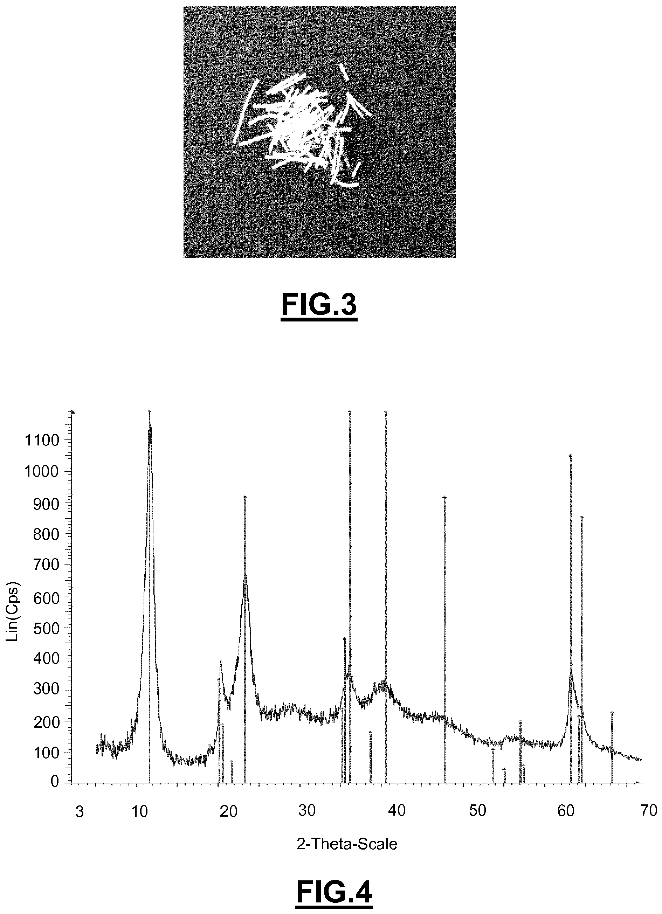

Des extrudés du matériau solide de formule LiCl.2Al(OH)₃,nH₂O avec n = 0,25 présentant une bonne cohésion et un aspect correcte sont obtenus. Les extrudés obtenus sont représentés sur la photo de la figure 3.

Une phase LiCl.2Al(OH)₃,nH₂O est détectée sur le diagramme de diffraction des rayons X des extrudés du matériau solide de formule LiCl.2Al(OH)₃,nH₂O avec n = 0,25 de la figure 4.

Les extrudés obtenus sont également caractérisés par les mesures suivantes :
L'analyse élémentaire montre une bonne stoechiométrie Li/Al/Cl correspondant à la composition d'une structure LiCl.2Al(OH)₃,nH₂O
Al= 21,2 % masse ; Li= 4,2 % masse ; Cl;= 19 % masse.

Les extrudés obtenus présentent une surface spécifique : S_{BET} = 3 m²/g.

### Exemple 5 : test de cohésion

La résistance mécanique des extrudés obtenus selon les exemples 1, 2 et 3 est testée au contact d'une solution de saumure.

Les différents résultats sont récapitulés dans le tableau 1.

**Tableau 1: protocole de MEF mise en oeuvre et aspect des extrudés correspondants**

| Exemples | 1 (non-conforme) | 2 (non-conforme) | 3 (non-conforme) | 4 (selon l'invention) |
|---|---|---|---|---|
| Étape de mise en forme | Malaxage acide et basique + Extrusion sans liant | Malaxage avec un liant ciment + extrusion | extrusion directe | extrusion directe |
| Filière | 1 mm | 1 mm | 0,8 mm | 0,8 mm |
| Séchage final extrudés (étape e) | - | Étuve climatique, 25°C, 98% d'eau ou 40°C, 12h | 500°C, 4 h | 40°C, 12 h |
| Aspect des extrudés au contact de la saumure | "joncs" qui se délitent vite | nombreuses fissures, extrudés qui deviennent poudre | Filière 0.8 mm : 40°C : extrudés sans défauts apparents | Filière 0.8 mm : 40°C : extrudés sans défauts apparents |
| Phase en DRX | - | - | Li_{0,5}Al₂O₄ | LiCl.2Al(OH)₃,nH₂O |

Les extrudés obtenus selon l'invention (exemple 4) comparativement à ceux obtenus selon à des procédés de préparation non-conformes à l'invention, présentent une bonne cohésion, ne présentent pas ou peu de fissures qui pourraient provoquer un gonflement néfaste à la cohésion et à la tenue du matériau lorsque celui est mis au contact d'une solution saumure. Par ailleurs, lesdits extrudés selon l'invention restent intacts et produisent très peu de fines lorsqu'ils sont placés dans une solution de saumure.

### Exemple 6 : Test de résistance mécanique par vieillissement accéléré sur table d'agitation.

La résistance mécanique des extrudés peut être testée par l'intermédiaire d'un protocole de vieillissement accéléré sur table d'agitation :
5g de matériau solide mis en forme et 25 mL de saumure naturelle sont placés dans un contenant cylindrique de capacité 60 mL. Ce contenant est fixé à la table d'agitation pendant toute la durée du test.

La composition de la saumure naturelle utilisée lors de ce test est donnée dans le tableau 2.

**Tableau 2: composition de la saumure naturelle utilisée pour le test de résistance mécanique**

| | Na | K | Li | Mg | Ca | B | SO₄ | Sr | Cl |
|---|---|---|---|---|---|---|---|---|---|
| Concentration (mol/L) | 4,4 | 0,24 | 0,068 | 0,086 | 0,040 | 0,031 | 0,035 | 0,001 | 4,89 |

La table d'agitation est animée d'un mouvement unidirectionnel horizontal d'amplitude 4 cm à une vitesse de 190 mouvements par minute. Les solides mis en forme sont ainsi agités pendant une durée totale de 168h.

A l'issue de ces 168h, le mélange solides mis en forme-saumure est tamisé à l'aide d'une grille de 315 µm. Puis les solides mis en forme restant sur le tamis sont lavés avec de la saumure dont la composition est indiquée dans le tableau 2. La fraction liquide ainsi obtenue, contenant de fines particules solides (diamètre inférieur à 315 µm) en suspension, est filtrée à l'aide d'un Büchner équipé d'un papier filtre dont les pores ont une dimension de 0,45 µm. Le gâteau formé par l'agglomération des fines particules est lavé avec de l'eau déminéralisée.

Le résidu solide ainsi obtenu est séché en étuve à 50°C jusqu'à stabilisation de la masse. Le rapport de la masse de résidu solide sur la masse de solides mis en forme initiale est alors calculé, donnant accès à un pourcentage de destruction des solides mis en forme.

Le pourcentage de destruction des solides mis en forme permet d'apprécier la cohésion des solides. Une bonne cohésion est notamment obtenue pour les solides dont le pourcentage de destruction est inférieur à 60%, et de préférence inférieur à 50%. Les extrudés de l'exemple 4 vérifient bien cette condition. Les extrudés obtenus dans les exemples 1 et 2 présentent un pourcentage de destruction supérieur à 60%.

### Exemple 7 (selon l'invention) : test du matériau selon l'invention réalisé selon l'exemple 4 dans le procédé d'extraction du lithium selon l'invention.

Le matériau selon l'invention préparé dans l'exemple 4 est introduit dans une colonne double enveloppe pour constituer un lit cylindrique de diamètre 2,5cm et de hauteur 30cm.

Le matériau est alors activé à température ambiante T=20°C par une solution de chlorure de lithium LiCI de concentration 0,02 mol/L en flux descendant à un débit de 3 BV/h. Le volume total de solution de LiCI utilisé est de 14 BV.

Une fois l'étape d'activation terminée, le chargement est effectué à l'aide d'une saumure naturelle dont la composition est donnée dans le tableau 3.

**Tableau 3: composition de la saumure naturelle utilisée pour le chargement**

| | Na | K | Li | Mg | Ca | B | SO₄ | Sr | Cl |
|---|---|---|---|---|---|---|---|---|---|
| Concentration (mol/L) | 4,4 | 0,24 | 0,068 | 0,086 | 0,040 | 0,031 | 0,035 | 0,001 | 4,89 |

Le chargement du matériau activé par adsorption est effectué par passage de la saumure naturelle sur ledit matériau activé, à une température de 60°C, la température étant maintenue à l'aide d'une circulation d'eau chauffée dans la double enveloppe, avec un débit de 3 BV/h en flux ascendant.

Dans les conditions de l'exemple, la capacité d'adsorption du matériau est de 4,7 mg de Li/g de matériau solide sec pour un rendement de récupération du lithium de 93%.

A l'issue du chargement, l'étape de lavage est pratiquée en utilisant une solution aqueuse de chlorure de sodium. Cette solution est préparée à la saturation du chlorure de sodium NaCl à 20°C. La solution est ensuite chauffée à 60°C et passée à la même température en flux descendant dans la colonne à un débit de 3 BV/h pour une quantité totale de 4 BV.

Puis on procède à l'étape de désorption du lithium par passage d'une solution de chlorure de lithium (LiCl) de concentration 0,02 mol/L sur ledit matériau. Cette désorption est effectuée à une température de 20°C avec un débit de 3 BV/h et en flux descendant. L'éluat contenant le lithium est récupéré entre 0,75 et 2,25 BV.

La composition de l'éluat ainsi que les facteurs de décontamination résultants sont résumés dans le tableau 4.

**Tableau 4: composition de l'éluat et facteurs de décontamination**

| X | Na | K | Li | Mg | Ca | B | SO₄ | Sr | Cl |
|---|---|---|---|---|---|---|---|---|---|
| Composition (mol/L) | 0,52 | 3,3.10⁻⁴ | 0,11 | 8,6.10⁻³ | 4,3.10⁻³ | 1,0.10⁻³ | 9,4.10⁻⁵ | 8,0.10⁻⁶ | 0,66 |
| Facteur de décontamination | 10 | 1000 | - | 15 | 10 | 50 | 500 | 90 | 10 |

Les concentrations en éléments dans la saumure et dans l'éluat sont déterminées par la méthode d'ICP optique connue de l'homme du métier.

Les concentrations en Cl dans l'éluat et la saumure sont déterminées par la méthode de chromatographie ionique connue de l'homme du métier.

Le procédé d'extraction selon l'invention permet donc l'extraction sélective du lithium à partir de la saumure naturelle. La sélectivité par rapport au lithium est exprimée sous la forme d'un facteur de décontamination qui est égal au rapport molaire X/Li dans la saumure naturelle initiale divisé par le rapport molaire X/Li dans l'éluat et qui tient compte de l'apport extérieur de lithium par la solution de lavage.

Les résultats obtenus indiquent que le solide préparé selon l'invention est particulièrement sélectif en potassium (K), en strontium (Sr) en bore (B) et en sulfates (SO₄).

### Exemple 8 (non conforme) : test des matériaux non-conformes à l'invention réalisés selon les exemples 1 et 2 dans un procédé d'extraction du lithium.

Le matériau solide de formule LiCl.2Al(OH)₃,nH₂O préparé selon l'exemple 1, selon un procédé de synthèse non-conforme à l'invention en ce que l'étape de mise en forme de la pâte obtenue est réalisée selon la technique classique de malaxage acide/basique extrusion est testé dans un procédé d'extraction du lithium opérant dans des conditions identiques à celles de l'exemple 7.

Comme indiqué dans l'exemple 1, aucun extrudé intact n'a pu être obtenu. Les joncs obtenus sont très friables et n'ont aucune tenue dans la saumure.

Le matériau préparé dans l'exemple 1 est introduit dans une colonne double enveloppe identique à celle utilisée dans l'exemple 7.

Cependant, dés l'étape d'activation du matériau, on constate l'apparition de poudre, entrainant rapidement le colmatage de la colonne et l'impossibilité de faire circuler la saumure.

De la même manière, Le matériau solide de formule LiCl.2Al(OH)₃,nH₂O préparé selon l'exemple 2, selon un procédé de synthèse non-conforme à l'invention en ce que l'étape de mise en forme de la pâte obtenue est réalisée par extrusion en présence d'un liant inorganique de la famille des liants hydraulique ajouté pendant la phase de malaxage est testé dans un procédé d'extraction du lithium opérant dans des conditions identiques à celles de l'exemple 7.

Comme indiqué dans l'exemple 2, les extrudés obtenus sont friables et présentent de nombreuses fissures.

Après son introduction dans une colonne double enveloppe identique à celle utilisée dans l'exemple 7, et dès l'étape d'activation du matériau, on constate l'apparition de poudre, entrainant rapidement le colmatage de la colonne et l'impossibilité de faire circuler la saumure.

Les matériaux préparés selon un procédé de préparation non-conforme à l'invention ne permettent pas leur utilisation dans un procédé d'extraction sélective du lithium du fait de leur mauvaise cohésion.

## Revendications

1. Procédé de préparation d'un matériau solide cristallisé-de formule LiCl.2Al(OH)₃,nH₂O avec n étant compris entre 0,01 et 10, ledit procédé comprenant au moins les étapes suivantes :
a) une étape de mélange, en milieu aqueux, d'au moins une source d'alumine et d'au moins une source de lithium pour obtenir une suspension, ladite source de lithium étant le chlorure de lithium (LiCl),
b) une étape de filtration de la suspension obtenue à l'étape a) pour obtenir une pâte,
c) une étape de séchage de la pâte obtenue à l'issue de l'étape b), à une température comprise entre 20 et 80°C pendant une durée comprise entre 1h et 12h,
d) une étape de mise en forme par extrusion de ladite pâte séchée, directement après l'étape c) de séchage pour obtenir des extrudés, ladite étape d) de mise en forme étant réalisée en l'absence de liant,
e) une étape de séchage des extrudés obtenus à l'issue de l'étape d) à une température comprise entre 20 et 200°C pendant une durée comprise entre 1 et 20 heures, pour obtenir le matériau solide cristallisé de formule LiCl.2Al(OH)₃,nH₂O sous forme d'extrudés.

2. Procédé selon la revendication 1 dans lequel la source d'alumine est le trihydroxyde d'aluminium Al(OH)₃.

3. Procédé selon l'une des revendications 1 ou 2 dans lequel ladite source d'alumine, de préférence le trihydroxyde d'aluminium Al(OH)₃, est préparé préalablement au mélange avec au moins ladite source de lithium .

4. Procédé selon la revendication 2 ou 3 dans lequel le trihydroxyde d'aluminium Al(OH)₃ est préparé par précipitation de trichlorure d'aluminium (AlCl₃) et de soude (NaOH).

5. Procédé selon l'une des revendications 1 à 4 dans lequel ladite étape a) de mélange opère à une température comprise entre 40 et 120°C pendant une durée comprise entre 1 heure et 10 heures.

6. Procédé selon l'une des revendications 1 à 5 dans lequel ladite pâte séchée ne subit pas d'étapes intermédiaires entre ladite étape c) de séchage et ladite étape d) de mise en forme par extrusion.

7. Procédé selon l'une des revendications 1 à 6 dans lequel ladite étape e) de séchage opère à une température comprise entre 20 et 100°C pendant une durée comprise entre 1 heure et 18 heures.

8. Matériau solide de formule LiCl.2Al(OH)₃,nH₂O avec n étant compris entre 0,01 et 10, sous forme d'extrudé, et ne comprenant pas de liant.

9. Matériau solide cristallisé de formule LiCl.2Al(OH)₃,nH₂O avec n étant compris entre 0,01 et 10, sous forme d'extrudés, susceptible d'être obtenu selon un procédé tel que défini selon l'une quelconque des revendications 1 à 7.

10. Procédé d'extraction du lithium de solutions salines utilisant ledit matériau solide tel que défini selon la revendication 8 ou 9.

11. Procédé d'extraction selon la revendication 10 dans lequel ledit procédé d'extraction du lithium comprend au moins les étapes suivantes :
- une étape d'activation dudit matériau solide cristallisé de formule LiCl.2Al(OH)₃,nH₂O avec n étant compris entre 0,01 et 10,
- une étape de chargement dudit matériau activé par adsorption réalisée par passage de ladite solution saline sur ledit matériau activé,
- au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

12. Procédé d'extraction selon l'une des revendications 10 et 11 dans lequel ladite étape d'activation est réalisée par le passage ascendant ou descendant d'eau ou d'une solution de chlorure de lithium (LiCl) ayant une concentration comprise entre 0,001 mol/L et 0,1 mol/L.

13. Procédé d'extraction selon la revendication 10 dans lequel ladite étape d'activation est réalisée à une température comprise entre 0°C et 90°C, et à un débit compris entre 0,1 BV/h et 30 BV/h, BV/h signifiant volume occupé par le lit du solide dans une colonne par heure.

14. Procédé d'extraction selon l'une des revendications 10 à 13 dans lequel ladite étape de chargement est effectuée à une température comprise entre 0°C et 90°C, et à un débit compris entre 0,1 BV/h et 30 BV/h, BV/h signifiant volume occupé par le lit du solide dans une colonne par heure.

15. Procédé d'extraction selon l'une des revendications 10 à 14 dans lequel ladite solution de lavage utilisée dans l'étape de lavage est une solution aqueuse de chlorure de sodium (NaCl) comprenant éventuellement du chlorure de lithium (LiCl) ou de l'eau.

16. Procédé d'extraction selon l'une des revendications 10 à 15 dans lequel ladite étape de lavage est réalisée à une température comprise entre 0°C et 90°C, et à un débit compris entre 0,1 BV/h et 30 BV/h, BV/h signifiant volume occupé par le lit du solide dans une colonne par heure.

17. Procédé d'extraction selon l'une des revendications 10 à 16 dans lequel ladite étape de désorption est réalisée par passage ascendant ou descendant, d'eau ou d'une solution de chlorure de lithium (LiCl) contenant de 0,001 mol/L à 2 mol/L de LiCl.

18. Procédé d'extraction selon l'une des revendications 10 à 17dans lequel ladite étape de désorption est réalisée à une température comprise entre 0°C et 90°C, et à un débit compris entre 0,1 BV/h et 30 BV/h, BV/h signifiant volume occupé par le lit du solide dans une colonne par heure.

19. Dispositif d'extraction de lithium **caractérisé en ce qu'**il comprend une unité comprenant au moins une colonne, ladite colonne comprenant au moins une garniture comprenant le matériau solide cristallisé de formule LiCl.2Al(OH)₃,nH₂O avec n étant compris entre 0,01 et 10, mis en forme tel que défini selon la revendication 8 ou 9.

## Patentansprüche

1. Verfahren zur Bereitstellung eines kristallinen Feststoffmaterials der Formel LiCl.2Al(OH)₃,nH₂O, wobei n zwischen 0,01 und 10 ist, wobei das Verfahren aufweist wenigstens die folgenden Schritte:
a) einen Schritt des Mischens, in einem wässrigen Milieu, wenigstens einer Aluminiumoxidquelle und wenigstens einer Lithiumquelle zum Erlangen einer Suspension, wobei die Lithiumquelle Lithiumchlorid (LiCl) ist,
b) einen Schritt des Filterns der im Schritt a) erlangten Suspension zum Erlangen einer Paste,
c) einen Schritt des Trocknens der am Ausgang von Schritt b) erlangten Paste bei einer Temperatur, die zwischen 20 und 80°C liegt, während einer Dauer, die zwischen 1h und 12h liegt,
d) einen Schritt des Formens der getrockneten Paste via Extrudieren direkt nach dem Schritt c) des Trocknens zum Erlangen von Strangpressteilen, wobei der Schritt d) des Formens in Abwesenheit von Bindemitteln realisiert wird,
e) einen Schritt des Trocknens der Strangpressteile, die am Ausgang des Schritts d) erlangt wurden, bei einer Temperatur, die zwischen 20 und 200°C liegt, während einer Dauer, die zwischen 1 und 20 Stunden liegt, zum Erlangen des kristallinen Feststoffmaterials der Formel LiCl.2Al(OH)₃,nH₂O in der Form von Strangpressteilen.

2. Verfahren gemäß Anspruch 1, wobei die Aluminiumoxidquelle Trihydroxid-Aluminium Al(OH)₃ ist.

3. Verfahren gemäß einem der Ansprüche 1 oder 2, wobei die besagte Aluminiumoxidquelle, bevorzugt das Trihydroxid-Aluminium Al(OH)₃, vor dem Mischen mit der wenigstens einen Lithiumquelle bereitgestellt wird.

4. Verfahren gemäß Anspruch 2 oder 3, wobei das Trihydroxid-Aluminium Al(OH)₃ bereitgestellt wird durch Fällung von Aluminiumtrichlorid (ALCL₃) und von Natron (NaOH).

5. Verfahren gemäß einem der Ansprüche 1 bis 4, wobei der Schritt a) des Mischens erfolgt bei einer Temperatur, die zwischen 40 und 120°C liegt, während einer Dauer, die zwischen 1 Stunde und 10 Stunden liegt.

6. Verfahren gemäß einem der Ansprüche 1 bis 5, wobei die getrocknete Paste zwischen dem Schritt c) des Trocknens und dem Schritt d) des Formens via Extrusion keinen Zwischenschritten unterliegt.

7. Verfahren gemäß einem der Ansprüche 1 bis 6, wobei der Schritt e) des Trocknens erfolgt bei einer Temperatur, die zwischen 20 und 100°C liegt, während einer Dauer, die zwischen 1 Stunde und 18 Stunden liegt.

8. Feststoffmaterial der Formel LiCl.2Al(OH)₃,nH₂O, wobei n zwischen 0,01 und 10 ist, in Form eines Strangpressteils und das kein Bindemittel aufweist.

9. Kristallines Feststoffmaterial der Formel LiCl.2Al(OH)₃,nH₂O, wobei n zwischen 0,01 und 10 liegt, in der Form von Strangpressteilen, die erlangt werden können gemäß einem Verfahren wie definiert gemäß irgendeinem der Ansprüche 1 bis 7.

10. Verfahren zur Extraktion von Lithium aus salzhaltigen Lösungen unter Verwenden des Feststoffmaterials wie im Anspruch 8 oder 9 definiert.

11. Verfahren zur Extraktion gemäß Anspruch 10, wobei das Verfahren zur Extraktion von Lithium wenigstens die folgenden Schritte aufweist:
- einen Schritt der Aktivierung des kristallinen Feststoffmaterials der Formel LiCl.2Al(OH)₃,nH₂O, wobei n zwischen 0,01 und 10 ist,
- einen Schritt des Beladens des aktivierten Materials via Adsorption, der realisiert wird durch Passieren der salzhaltigen Lösung über das aktivierte Material,
- wenigstens einen Schritt des Waschens der salzhaltigen Lösung unter Imprägnieren des besagten Materials durch Passieren einer Wasch-Lösung über das besagte Material,
- einen Schritt der Desorption des Lithiums, der realisiert wird durch Passieren von Wasser oder einer wässrigen Lithiumsalzlösung über das besagte Material zum Erlangen eines Eluats, das wenigstens Lithium aufweist.

12. Verfahren zur Extraktion gemäß einem der Ansprüche 10 und 11, wobei der Schritt der Aktivierung realisiert wird durch Stromaufwärts- oder Stromabwärts-Passieren von Wasser oder einer Lösung aus Lithiumchlorid (LiCl) mit einer Konzentration, die zwischen 0,001 mol/L und 0,1 mol/L hat.

13. Verfahren zur Extraktion gemäß Anspruch 10, wobei der besagte Schritt zur Aktivierung realisiert wird bei einer Temperatur, die zwischen 0°C und 90°C liegt, und bei einem Durchfluss, der zwischen 0,1 BV/h und 30 BV/h liegt, wobei BV/h das Volumen bezeichnet, das von dem Feststoff-Bett eingenommen wird in einer Säule pro Stunde.

14. Verfahren zur Extraktion gemäß einem der Ansprüche 10 bis 13, wobei der Schritt des Beladens durchgeführt wird bei einer Temperatur, die zwischen 0°C und 90°C liegt, und bei einem Durchfluss, der zwischen 0,1 BV/h und 30 BV/h liegt, wobei BV/h das Volumen bezeichnet, dass von dem Feststoff-bett eingenommen wird in einer Säule pro Stunde.

15. Verfahren zur Extraktion gemäß einem der Ansprüche 10 bis 14, wobei die Wasch-Lösung, die im dem Schritt des Waschens verwendet wird, eine wässrige Natriumchlorid(NaCl)-Lösung, die ggf. Lithiumchlorid (LiCl) aufweist, oder Wasser ist.

16. Verfahren zur Extraktion gemäß einem der Ansprüche 10 bis 15, wobei der besagte Schritt des Waschens realisiert wird bei einer Temperatur, die zwischen 0°C und 90°C liegt, und bei einem Durchfluss, der zwischen 0,1 BV/h und 30 BV/h liegt, wobei BV/h das Volumen bezeichnet, das von dem Feststoff-Bett eingenommen wird in einer Säule pro Stunde.

17. Verfahren zur Extraktion gemäß einem der Ansprüche 10 bis 16, wobei der Schritt der Desorption realisiert wird durch Stromaufwärts- oder Stromabwärts-Passieren von Wasser oder einer Lithiumchlorid-Lösung (LiCl), die 0,001 mol/L bis 2 mol/L LiCl enthält.

18. Verfahren zur Extraktion gemäß einem der Ansprüche 10 bis 17, wobei der Schritt der Desorption realisiert wird bei einer Temperatur, die zwischen 0°C und 90°C liegt, und bei einem Durchfluss, der zwischen 0,1 BV/h und 30 BV/h liegt, wobei BV/h ein Volumen bezeichnet, das von dem Feststoff-Bett eingenommen wird in einer Säule pro Stunde.

19. Vorrichtung zur Extraktion von Lithium, **dadurch gekennzeichnet, dass** sie eine Einheit aufweist, die wenigstens eine Säule aufweist, wobei die Säule wenigstens einen Einsatz aufweist, der das kristalline Feststoffmaterial der Formel LiCl.2Al(OH)₃, nH₂O aufweist, wobei n zwischen 0,01 und 10 liegt, das geformt ist so wie gemäß dem Anspruch 8 oder 9 definiert.

## Claims

1. A method for preparing a crystallized solid material of formula LiCl.2Al(OH)₃,nH₂O with n being comprised between 0.01 and 10, said method comprising at least the following steps:
a) mixing, in an aqueous medium, at least one source of alumina and at least one source of lithium for obtaining a suspension, said source of lithium being lithium chloride (LiCl)
b) filtrating the suspension obtained in step a) for obtaining a slurry,
c) drying the slurry obtained at the end of step b), at a temperature comprised between 20 and 80°C for a period comprised between 1 h and 12 h,
d) shaping by extrusion said dried slurry, directly after the drying step c) for obtaining extrudates, said shaping step d) being carried out in the absence of any binder,
e) drying extrudates at the end of step d) at a temperature comprised between 20 and 200°C for a period comprised between 1 and 20 hours, for obtaining the crystallized solid material of formula LiCl.2Al(OH)₃,nH₂O as extrudates.

2. The method according to claim 1, wherein the alumina source is aluminium trihydroxide Al(OH)₃.

3. The method according to claim 1, wherein said alumina source and preferably the aluminium tri-hydroxide Al(OH)₃, is prepared prior to the mixing with at least said lithium source.

4. The method according to claim 2 or 3, wherein said is prepared by precipitating aluminium trichloride (AlCl₃) and soda (NaOH).

5. The method according to claim 1, wherein said mixing step a) operates at a temperature comprised between 40 and 120°C for a period comprised between 1 hour and 10 hours.

6. The method according to claim 1, wherein said dried slurry does not undergo intermediate steps between said drying step c) and said shaping step d) by extrusion.

7. The method according to claim 1, wherein said drying step e) operates at a temperature comprised between 20 and 100°C for a period comprised between 1 hour and 18 hours.

8. A solid material of formula LiCl.2Al(OH)₃,nH₂O with n being comprised between 0.01 and 10, , shaped in the form of an extrudate, and not comprising any binder.

9. A crystallized solid material of formula LiCl.2Al(OH)₃,nH₂O with n being comprised between 0.01 and 10, shaped in the form of extrudates, which may be obtained according to a method as defined according to any one of claims 1 to 7.

10. A method for extracting lithium from saline solutions using said solid material as defined according to claim 8 or 9.

11. The extraction method according to claim 10, wherein said method for extracting lithium comprises at least the following steps:
- activating said crystallized solid material of formula LiCl.2Al(OH)₃,nH₂O with n being comprised between 0.01 and 10,
- loading said material activated by adsorption achieved by having said saline solution pass over said activated material,
- washing the saline solution impregnating said material by having a washing solution pass over said material,
- desorbing the lithium achieved by having water or an aqueous lithium salt solution pass over said material in order to obtain an eluate comprising at least some lithium.

12. The extraction method according to any one of claims 10 and 11, wherein said activation is carried out by having water or a lithium chloride (LiCI) solution pass downwards or upwards with a concentration comprised between 0.001 mol/L and 0.1 mol/L.

13. The extraction method according to claim 10, wherein the activation is carried out at a temperature comprised between 0°C and 90°C, and at a flow rate comprised between 0.1 BV/h and 30 BV/h, BV/h meaning the volume occupied by the bed of the solid in one column per hour.

14. The extraction method according to any one of claims 10 to 13, wherein said loading is carried out at a temperature comprised between 0°C and 90°C and at a flow rate comprised between 0.1 BV/h and 30 BV/h, BV/h meaning the volume occupied by the bed of the solid in one column per hour.

15. The extraction method according to any one of claims 10 to 14, wherein said washing solution used in the washing step is an aqueous sodium chloride (NaCl) solution optionally comprising lithium chloride (LiCl) or water.

16. The extraction method according to any one of claims 10 to 15, wherein said washing is carried out at a temperature comprised between 0°C and 90°C and at a flow rate comprised between 0.1 BV/h and 30 BV/h, BV/h meaning the volume occupied by the bed of the solid in one column per hour.

17. The extraction method according to any one of claims 10 to 16, wherein said desorbing is carried out by having water or a lithium chloride (LiCl) solution containing from 0.001 mol/L to 2 mol/L of LiCl pass upwards or downwards.

18. The extraction method according to any one of claims 10 to 17, wherein said desorbing is carried out at a temperature comprised between 0°C and 90°C and at a flow rate comprised between 0.1 BV/h and 30 BV/h, BV/h meaning the volume occupied by the bed of the solid in one column per hour.

19. A device for extracting lithium wherein said device comprises a unit comprising at least one column, said column comprising at least one packing comprising crystallized solid materials of formula LiCl.2Al(OH)₃,nH₂O with n being comprised between 0.01 and 10, shaped according to claim 8 or 9.
